# EUROPÄISCHE PATENTSCHRIFT

(11) **EP 2 800 648 B1**
(45) Veröffentlichungstag und Bekanntmachung des Hinweises auf die Patenterteilung: **03.10.2018**
(21) Anmeldenummer: 13713071.2
(22) Anmeldetag: 06.03.2013
(51) Int. Cl.: B23K 9/32, H01B 9/00, H01R 13/00

(54) **STECKERTEIL UND BUCHSENTEIL ZUR LÖSBAREN VERBINDUNG EINES ROHRBOGENS EINES WASSERGEKÜHLTEN SCHWEISSBRENNERS SOWIE VERBINDUNGSEINRICHTUNG**
PLUG PART AND SOCKET PART FOR DETACHABLY CONNECTING A PIPE ELBOW OF A WATER-COOLED WELDING TORCH AND CONNECTING DEVICE
PARTIE MÂLE ET PARTIE FEMELLE AUX FINS DE L'ASSEMBLAGE AMOVIBLE D'UN COUDE DE TUBE D'UN CHALUMEAU DE SOUDAGE REFROIDI PAR EAU AINSI QUE DISPOSITIF D'ASSEMBLAGE

(30) Priorität: 30.03.2012 AT 501152012
(43) Veröffentlichungstag der Anmeldung: 12.11.2014
(73) Patentinhaber: Fronius International GmbH, 4643 Pettenbach (AT)
(72) Erfinder: OBERNDORFER, Klaus, A-4655 Vorchdorf (AT); PLATZER, Daniel, A-4600 Wels (AT); RAXENDORFER, Josef, A-4652 Steinerkirchen (AT); LICHT, Sebastian, 4641 Steinhaus bei Wels (AT)
(74) Vertreter: Sonn & Partner Patentanwälte
(86) Internationale Anmeldenummer: PCT/AT2013/050057
(87) Internationale Veröffentlichungsnummer: WO 2013/142888

(56) Entgegenhaltungen:
- EP-A2- 0 620 615
- DE-C- 889 768
- DE-C1- 3 420 821
- GB-A- 1 403 225
- US-A- 3 234 317

## Beschreibung

Die Erfindung betrifft einen Steckerteil zur lösbaren Verbindung eines Rohrbogens eines wassergekühlten Schweißbrenners mit einem an einem Schlauchpaket allenfalls unter Zwischenanordnung eines Brennergehäuses angeordneten Buchsenteil, mit einem zylindrischen Rohrelement mit einem axial verlaufenden Kanal für einen Schweißdraht und ein Schutzgas, und mit zumindest zwei Kühlkanälen zur Hin- und Rückführung einer Kühlflüssigkeit, und mit einer drehbar am Rohrelement angeordneten Überwurfmutter mit einem Innengewinde zur Verbindung mit einem entsprechenden Außengewinde am Buchsenteil, wobei die Mündung des zumindest einen Kühlkanals für die Hinführung der Kühlflüssigkeit getrennt angeordnet sind.

Weiters betrifft die Erfindung einen Buchsenteil zur lösbaren Verbindung eines Schlauchpakets mit einem an einem Rohrbogen eines wassergekühlten Schweißbrenners angeordneten Steckerteil, mit einem zumindest teilweise zylindrisch ausgebildeten Endstück mit einem axial verlaufenden Kanal für einen Schweißdraht und ein Schutzgas und zumindest zwei Kühlkanälen zur Hin- und Rückführung einer Kühlflüssigkeit mit entsprechenden Mündungen am Endstück, und mit einem Außengewinde zur Verbindung mit einem entsprechenden Innengewinde einer Überwurfmutter des Steckerteils.

Schließlich betrifft die Erfindung eine Verbindungseinrichtung zur lösbaren Verbindung eines Rohrbogens eines wassergekühlten Schweißbrenners mit einem Schlauchpaket, wobei der Rohrbogen einen oben genannten Steckerteil und das Schlauchpaket allenfalls unter Zwischenanordnung eines Brennergehäuses einen oben genannten Buchsenteil aufweist.

Die GB 1 403 225 A zeigt ein Steckerteil zur lösbaren Verbindung eines Rohrbogens eines wassergekühlten Schweißbrenners mit einem an einem Schlauchpaket angeordneten Buchsenteil der gegenständlichen Art.

Die DE 2 243 924 und die WO 98/09765 A1 beschreiben Verbindungseinrichtungen bei Schweißbrennern mit Führungen für einen Schweißdraht für Schutzgas und für eine Kühlflüssigkeit mit einem Steckerteil und Buchsenteil der gegenständlichen Art.

Üblicherweise werden Rohrbögen lösbar mit dem Schlauchpaket oder dem Brennergehäuse bzw. Brennergriff eines Schweißbrenners verbunden. Dadurch kann der Schweißer einerseits aus verschieden gestalteten Rohrbögen wählen und den jeweils geeignetsten für die Durchführung des Schweißprozesses verwenden und andererseits einen Tausch des Rohrbogens vornehmen, wenn dieser beschädigt oder verschmutzt ist. Übliche Verbindungen zwischen Rohrbogen und Schlauchpaket oder Brennergehäuse werden mit entsprechenden Gewinden oder Schnellverschlüssen wie z.B. Bajonettverschlüssen vorgenommen. Neben der notwendigen mechanischen Stabilität der Verbindung zwischen Rohrbogen und Schlauchpaket bzw. Brennergriff oder Brennergehäuse soll die Verbindung auch sicherstellen, dass im Wesentlichen kein Schutzgas durch Undichtheiten austritt. Da über die Verbindungseinrichtung, also den Steckerteil und Buchsenteil auch elektrische Energie übertragen wird, soll die Verbindungseinrichtung auch die entsprechende elektrische Leitung gewährleisten. Für das Schweißen ist es von Vorteil, wenn der Rohrbogen zumindest in innerhalb eines gewissen Bereichs drehbar ausgebildet ist, sodass der Schweißbrenner immer im optimalen Winkel zur beabsichtigten Schweißnaht gehalten werden kann. Bei wassergekühlten Schweißbrennern soll zusätzlich verhindert werden, dass das Kühlwasser beim Abnehmen des Rohrbogens aus dem Buchsenteil austritt. Weiters ist es bei herkömmlichen wassergekühlten Schweißbrennern von Nachteil, dass das Kühlsystem abgeschaltet werden muss, wenn der Rohrbogen gewechselt oder nur verdreht wird.

Verbindungseinrichtungen zwischen Rohrbogen und Schlauchpaket bzw. Brennergehäuse eines Schweißbrenners bekannter Art erfüllen häufig nur einen Teil der genannten Forderungen und sind in Ihrer Handhabung komplizierter.

Die Aufgabe der vorliegenden Erfindung besteht daher in der Schaffung eines Steckerteils und eines Buchsenteils einer Verbindungseinrichtung zur lösbaren Verbindung eines Rohrbogens eines wassergekühlten Schweißbrenners mit einem Schlauchpaket, durch welche die obigen Forderungen erfüllt werden können. Der Steckerteil und Buchsenteil einer solchen Verbindungseinrichtung soll möglichst einfach und kostengünstig herstellbar sein. Zusätzlich soll zumindest eine Winkellage bzw. Bezugslage des Rohrbogens gegenüber dem Schlauchpaket oder Brennergehäuse einfach eingestellt werden können.

Gelöst wird die erfindungsgemäße Aufgabe durch einen oben genannten Steckerteil, wobei die Mündung des einen Kühlkanals außen am zylindrischen Rohrelement und die Mündung des anderen Kühlkanals innen am zylindrischen Rohrelement angeordnet ist. Dadurch ergibt sich eine optimale Trennung der Mündungen des hinführenden und rückführenden Kühlkanals. Die Mündung des hinführenden Kühlkanals kann außen und die Mündung des rückführenden Kühlkanals innen am zylindrischen Rohrelement angeordnet werden oder umgekehrt. Durch eine derartige Ausführungsform wird eine Zwangsführung der Kühlflüssigkeit im Steckerteil und zugehörigen Rohrbogen erzielt und verhindert, dass die Kühlflüssigkeit, bevor sie die zu kühlenden Komponenten erreicht hat umkehrt und wieder ins Kühlgerät zurückfließt.

Gemäß einer Ausführungsform der Erfindung ist die Mündung des einen Kühlkanals außen am zylindrischen Rohrelement des Steckerteils und die Mündung des anderen Kühlkanals innen am zylindrischen Rohrelement angeordnet.

Vorzugsweise ist am zylindrischen Rohrelement ein Flansch mit zumindest einer Aufnahmeöffnung zur Aufnahme eines stiftförmigen Element des Buchsenteils zur Festlegung zumindest einer Winkelposition des Rohrbogens angeordnet. Wenn am Flansch des zylindrischen Rohrelements zumindest eine Aufnahmeöffnung zur Aufnahme eines stiftförmigen Elements des Buchsenteils zur Festlegung zumindest einer Winkelposition des Rohrbogens angeordnet ist, kann in zumindest einer Winkelposition des Rohrbogens sozusagen eine Bezugslage hergestellt werden. Von dieser zumindest einen Bezugslage aus kann der Schweißer den Rohrbogen bei Bedarf in eine von ihm gewünschte andere Winkellage bewegen. Bei Vorsehen mehrerer Aufnahmeöffnungen für ein stiftförmiges Element des Buchsenteils können in bestimmten Winkelabständen mehrere Bezugslagen eingestellt werden, welche der Schweißer je nach Schweißprozess auswählen kann. Eine entsprechende Markierung am Steckerteil und allenfalls Buchsenteil, beispielsweise mit entsprechenden Kerben oder Farbmarkierungen kann diesbezüglich eine Erleichterung bieten.

Die Aufnahmeöffnung ist vorteilhafter Weise durch eine Bohrung gebildet. Eine Bohrung, welche nicht gezwungenermaßen durchgehend sein muss, sondern auch beispielsweise in Form einer Sacklochbohrung ausgebildet sein kann, ist besonders einfach und rasch herstellbar.

Wenn die Überwurfmutter das Ende des Rohrelements überragt, und ein Anschlagelement zur Verhinderung eines axialen Verschiebens der Überwurfmutter hinter das Ende des Rohrelements vorgesehen ist, kann das Rohrelement vor Beschädigung oder Deformierung geschützt werden.

Zwischen der Überwurfmutter und dem Flansch des Rohrelements kann ein Gleitring aus elektrisch leitfähigem Material angeordnet sein. Durch einen derartigen Gleitring aus elektrisch leitfähigem Material kann eine Veränderung der Winkellage des Rohrbogens gegenüber dem Brennergriff oder Schlauchpaket einfach vorgenommen werden, ohne dass die Überwurfmutter vollständig geöffnet werden muss. Durch das elektrisch leitfähige Material wird sichergestellt, dass die Stromübertragung vom Schlauchpaket zum Rohrbogen und in der Folge zur Kontaktdüse ungehindert gewährleistet wird.

Die Überwurfmutter weist in Richtung des freien Endes des Rohrbogens vorzugsweise kleiner werdenden Durchmesser auf, und kann insbesondere kegelstumpfförmig ausgebildet sein. Eine derartige Ausbildungsform erleichtert die Handhabung der Überwurfmutter und verhindert bzw. reduziert entsprechende Kanten zwischen der Überwurfmutter und dem Rohrbogen.

Die Überwurfmutter kann eine Kunststoffumhüllung aufweisen. Eine derartige Kunststoffumhüllung aus geeignetem Material und in entsprechender Ausgestaltung, beispielsweise mit axialen Riefen, erleichtert ebenfalls die Handhabung und stellt eine sowohl elektrische als auch thermische Isolierung zum darunter liegenden Steckerteil des Schweißbrenners her.

Gelöst wird die erfindungsgemäße Aufgabe auch durch einen oben genannten Buchsenteil, wobei im Endstück ein Verbindungskanal zwischen den zumindest zwei Kühlkanälen vorgesehen ist, welcher bei verbundenem Steckerteil geschlossen und bei getrenntem Steckerteil geöffnet ist. Der Verbindungskanal ermöglicht das Umkehren der Kühlflüssigkeit zum Kühlgerät bei abgekoppeltem oder getrenntem Steckerteil und verhindert somit ein Austreten der Kühlflüssigkeit. Die Kühlkanäle im Buchsenteil sind so angeordnet, dass sie bei verbundenem Steckerteil und Buchsenteil mit den oben genannten getrennt angeordneten Mündungen im Steckerteil entsprechend übereinstimmen, sodass ein optimaler Kreislauf für die Kühlflüssigkeit gegildet wird.

Weiters ist es von Vorteil, wenn ein in Richtung des zu verbindenden Steckerteils federnd gelagertes stiftförmiges Element vorgesehen ist, welches zur Festlegung zumindest einer Winkelposition des Rohrbogens von zumindest einer Aufnahmeöffnung im Steckerteil aufnehmbar ist. Dadurch, kann eine Art Rastverbindung zwischen Buchsenteil und Steckerteil in der zumindest einen vorgegebenen Winkelposition bzw. Bezugslage hergestellt werden. Wenn wie oben beschrieben mehrere Aufnahmeöffnungen in verschiedenen Winkellagen im Steckerteil angeordnet sind, kann das stiftförmige Element am Buchsenteil in diesen verschiedenen Winkellagen einrasten, wodurch bestimmte Positionen des Rohrbogens gekennzeichnet werden können.

Das stiftförmige Element weist vorzugsweise ein im Wesentlichen halbkugelförmiges Ende auf. Durch eine derartige Gestaltung des Endes des stiftförmigen Elements kann dieses bei Verdrehen des Rohrbogens gegenüber dem Buchsenteil leicht verdrängt werden und eine andere Lage des mit dem Rohrbogen eingenommen werden.

Dabei ist es von Vorteil, wenn ein durch eine um den Kanal angeordnete Druckfeder federnd gelagertes Verschlusselement zum Verschließen der Mündungen der zumindest zwei Kühlkanäle am Endstück bei getrenntem Steckerteil vorgesehen ist. Dieses Verschlusselement stellt sicher, dass kein Kühlwasser austritt, wenn der Steckerteil vom Buchsenteil entfernt wird.

Gelöst wird die erfindungsgemäße Aufgabe auch durch eine Verbindungseinrichtung zur lösbaren Verbindung eines Rohrbogens eines wassergekühlten Schweißbrenners mit einem Schlauchpaket allenfalls unter Zwischenanordnung eines Brennergehäuses, wobei der Rohrbogen einen Steckerteil mit den oben genannten Merkmalen und das Schlauchpaket einen Buchsenteil mit den oben genannten Merkmalen aufweist. Zu den damit erzielbaren Vorteilen wird auf die obige Beschreibung des Steckerteils und Buchsenteils verwiesen.

Der Steckerteil ist mit dem Rohrbogen verbunden, vorzugsweise verlötet. Eine derartige Verbindung kann besonders rasch und einfach hergestellt werden. Alternativ dazu kann die Verbindung auch durch Pressen oder Kleben mit geeigneten Klebstoffen hergestellt werden.

Der Buchsenteil ist mit dem Ende eines Schlauchpakets allenfalls unter Zwischenanordnung eines Brennergehäuses verbunden. Die Verbindung des Buchsenteils mit dem Ende des Schlauchpakets oder dem Brennergehäuse kann ebenfalls durch verschiedene Arten erfolgen, insbesondere durch Kleben.

Wenn der Rohrbogen gegenüber dem Schlauchpaket um 360° verdrehbar ist, wobei zumindest eine Winkelposition des Rohrbogens durch die zumindest eine Aufnahmeöffnung im Steckerteil und das stiftförmige Element im Buchsenteil festgelegt ist, kann eine besondere Flexibilität für sämtliche Schweißverfahren erzielt werden.

Um zu verhindern dass ein Rohrbogen eines wassergekühlten

Schweißbrenners mit dem Buchsenteil am Brennergehäuse oder Schlauchpaket für einen gasgekühlten Schweißbrenner angeschlossen werden kann, sind die Dimensionen der Steckerteile und Buchsenteile von wassergekühlten Schweißbrennern und gasgekühlten Schweißbrennern vorzugsweise unterschiedlich ausgebildet. Eine derartige unterschiedliche Ausbildung kann beispielsweise in Form verschiedener Durchmesser der Überwurfmutter und dgl. erzielt werden.

Die vorliegende Erfindung wird anhand der beigefügten, schematischen Zeichnungen näher erläutert. Darin zeigen:
- Fig. 1: eine schematische Darstellung einer Schweißvorrichtung;
- Fig. 2: einen Rohrbogen mit einem Steckerteil und zugehörigen Buchsenteil in getrenntem Zustand in teilweise geschnittener Darstellung;
- Fig. 3: den Rohrbogen mit Steckerteil und Buchsenteil gemäß Fig. 2 in verbundenem Zustand in teilweise geschnittener Darstellung;
- Fig. 4: den Rohrbogen mit Steckerteil und Buchsenteil gemäß Fig. 2 in verbundenem Zustand in anderer Stellung in teilweise geschnittener Darstellung;
- Fig. 5: eine Stirnansicht auf den mit dem Rohrbogen verbundenen Steckerteil gemäß den Fig. 2 bis 4;
- Fig. 6: eine Stirnansicht auf den Buchsenteil gemäß den Fig. 2 bis 4;
- Fig. 7: eine Schrägansicht auf den mit dem Rohrbogen verbundenen Steckerteil gemäß den Fig. 2 bis 4; und
- Fig. 8: den Steckerteil und Buchsenteil in getrenntem Zustand gemäß Fig. 2 in vergrößerter Darstellung.

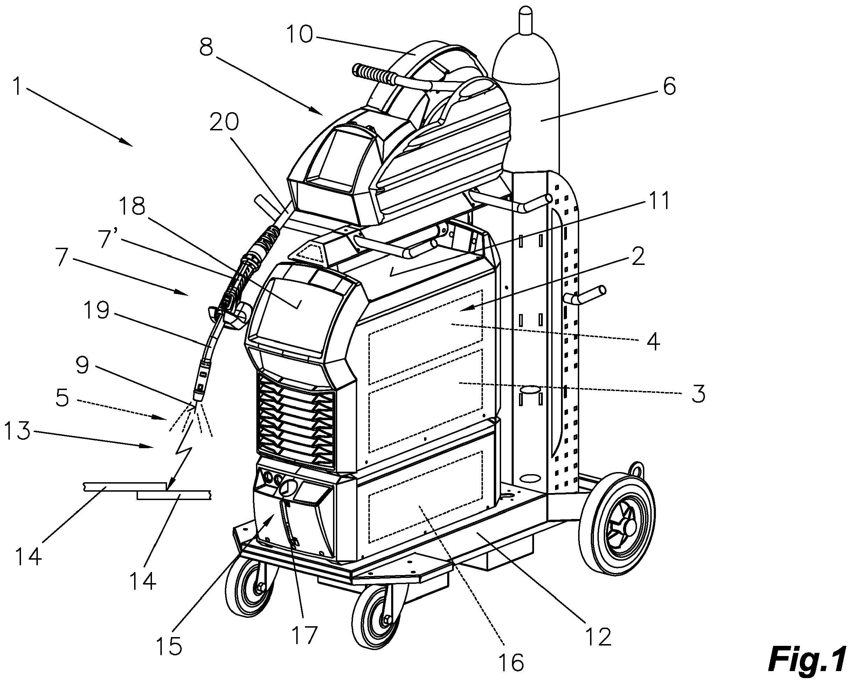

In Fig. 1 ist eine Schweißvorrichtung 1 für verschiedenste Prozesse bzw. Verfahren, wie z.B. MIG/MAG-, WIG/TIG-, Elektroden-, Doppeldraht/Tandem-Schweißverfahren, Plasma- oder Lötverfahren usw., gezeigt.

Die Schweißvorrichtung 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventilen, usw.. Die Steuervorrichtung 4 ist beispielsweise mit einem Steuerventil verbunden, welches in einer Versorgungsleitung für ein Schutzgas 5, wie beispielsweise CO₂, Helium oder Argon und dgl., zwischen einem Gasspeicher 6 und einem Schweißbrenner 7 angeordnet ist.

Zudem kann über die Steuervorrichtung 4 noch eine Vorrichtung 8 zur Förderung eines Schweißdrahts 9 von einer Vorratstrommel 10 bzw. einer Drahtrolle in den Bereich des Schweißbrenners 7 angesteuert werden, wie es beispielsweise für das MIG/MAG-Schweißen üblich ist. Selbstverständlich kann die Fördervorrichtung 8 auch in der Schweißvorrichtung 1, insbesondere im Gehäuse 11 der Stromquelle 2, integriert und nicht, wie in Fig. 1 dargestellt, als Zusatzgerät auf einem Fahrwagen 12 positioniert sein. Die Fördervorrichtung 8 für den Schweißdraht 9 kann auch direkt auf der Schweißvorrichtung 1 aufgesetzt werden, wobei das Gehäuse 11 der Stromquelle 2 an der Oberseite zur Aufnahme der Fördervorrichtung 8 ausgebildet ist, und der Fahrwagen 12 entfallen kann.

Der Schweißdraht 9 kann von einer Fördervorrichtung 8 auch außerhalb des Schweißbrenners 7 an die Prozessstelle zugeführt werden, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem aus einem oder mehreren Teilen gebildeten Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 wird über eine weitere Schweißleitung (nicht dargestellt) für das weitere Potential, insbesondere ein Masse-Kabel, mit der Stromquelle 2 verbunden, wodurch über den Lichtbogen 13 bzw. einem gebildeten Plasmastrahl ein Stromkreis für einen Prozess aufgebaut werden kann. Bei Verwendung eines Brenners mit internem Lichtbogen 13, wie dies bei einem Plasma-Brenner der Fall sein kann, werden die beiden Schweißleitungen zum Brenner geführt, sodass im Brenner ein entsprechender Stromkreis aufgebaut werden kann (nicht dargestellt).

Zum Kühlen des Schweißbrenners 7 wird dieser über ein Kühlgerät 15 unter Zwischenschaltung allfälliger Komponenten, wie beispielsweise einem Strömungswächter, mit einem Flüssigkeitsbehälter, insbesondere einem Wasserbehälter 16 mit einer Füllstandsanzeige 17, verbunden. Bei Inbetriebnahme des Schweißbrenners 7 wird das Kühlgerät 15, insbesondere eine für die im Wasserbehälter 16 angeordnete Flüssigkeit verwendete Flüssigkeitspumpe, gestartet, wodurch eine Kühlung des Schweißbrenners 7 bewirkt wird. Wie bei dem dargestellten Ausführungsbeispiel gezeigt, wird das Kühlgerät 15 auf dem Fahrwagen 12 positioniert, auf das anschließend die Stromquelle 2 gestellt wird. Die einzelnen Komponenten der Schweißvorrichtung 1, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Die Schweißvorrichtung 1, insbesondere die Stromquelle 2, weist weiters eine Ein- und/oder Ausgabevorrichtung 18 auf, über welche die unterschiedlichsten Schweißparameter, Betriebsarten oder Schweißprogramme des Schweißgerätes 1 eingestellt bzw. aufgerufen und angezeigt werden können. Die über die Ein- und/oder Ausgabevorrichtung 18 eingestellten Schweißparameter, Betriebsarten oder Schweißprogramme werden an die Steuervorrichtung 4 weitergeleitet und von dieser anschließend die einzelnen Komponenten der Schweißvorrichtung 1 angesteuert bzw. entsprechende Sollwerte für die Regelung oder Steuerung vorgegeben.

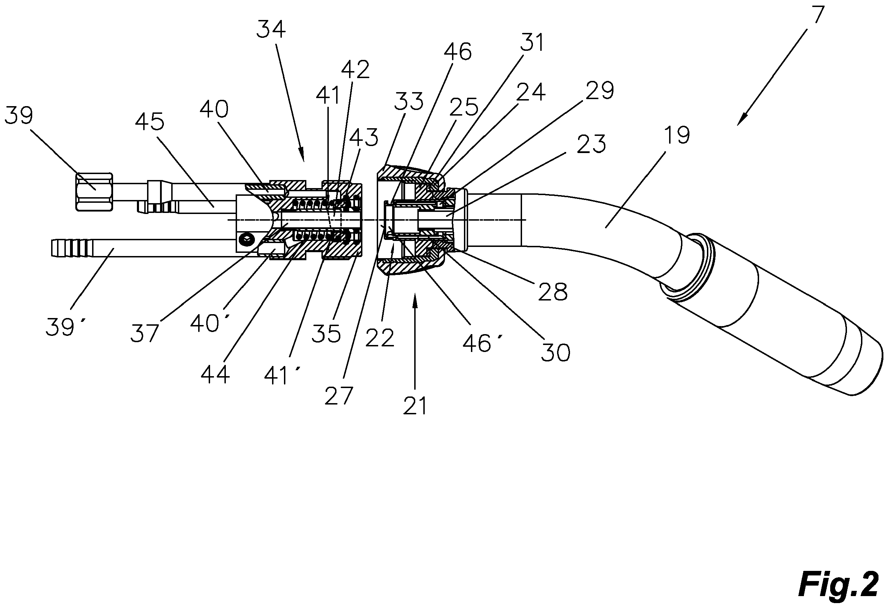

Beim dargestellten Ausführungsbeispiel ist der Schweißbrenner 7, umfassend einen Rohrbogen 19 und allenfalls ein Brennergehäuse 7' über ein Schlauchpaket 20 mit der Schweißvorrichtung 1 verbunden. Im Schlauchpaket 20 sind die einzelnen Leitungen, wie beispielsweise die Versorgungsleitung, Leitungen für den Schweißdraht 9, das Schutzgas 5, den Kühlkreislauf, die Datenübertragung, usw., von der Schweißvorrichtung 1 zum Schweißbrenner 7 angeordnet, wogegen das Masse-Kabel bevorzugt gesondert an der Stromquelle 2 angeschlossen wird. Das Schlauchpaket 20 wird vorzugsweise über eine nicht dargestellte Kupplungsvorrichtung an der Stromquelle 2 oder der Fördervorrichtung 8 angeschlossen, wogegen die einzelnen Leitungen im Schlauchpaket 20 am bzw. im Schweißbrenner 7 befestigt sind. Damit eine entsprechende Zugentlastung des Schlauchpakets 20 gewährleistet ist, kann das Schlauchpaket 20 über eine Zugentlastungsvorrichtung mit dem Gehäuse 11 der Stromquelle 2 oder der Fördervorrichtung 8 verbunden sein (nicht dargestellt). Um einen Tausch des Rohrbogens 19 des Schweißbrenners 7 zu ermöglichen, ist dieser über eine entsprechende Verbindungseinrichtung mit dem Schlauchpaket 20 oder einem Brennergehäuse 7', welches am Schlauchpaket 20 befestigt ist, verbunden. Die Verbindungseinrichtung beinhaltet einen anhand der Figuren 2 bis 7 näher erläuterten Steckerteil 21, der mit dem Rohrbogen 19 des Schweißbrenners 7 verbunden ist und einen Buchsenteil 34, der mit dem Schlauchpaket 20 oder einem mit dem Schlauchpaket 20 verbundenen Brennergehäuse 7' verbunden ist.

Grundsätzlich müssen für die unterschiedlichen Schweißverfahren bzw. Schweißvorrichtungen 1, wie beispielsweise WIG-Geräte, MIG/MAG-Geräte oder Plasmageräte, nicht alle zuvor benannten Komponenten verwendet bzw. eingesetzt werden. Wenn der Schweißbrenner 7 als gasgekühlter Schweißbrenner 7 ausgeführt ist, kann das Kühlgerät 15 auch entfallen. Die Schweißvorrichtung 1 wird zumindest durch die Stromquelle 2, die Fördervorrichtung 8 und allenfalls das Kühlgerät 15 gebildet, wobei diese Komponenten auch in einem gemeinsamen Gehäuse 11 angeordnet sein können. Es können noch weitere Teile bzw. Komponenten, wie beispielsweise ein Schleifschutz am Drahtvorschubgerät 8 oder ein Optionsträger an einer Haltevorrichtung für den Gasspeicher 6 usw., angeordnet werden.

Die in Fig. 1 dargestellte Ausführungsform einer Schweißvorrichtung 1 stellt nur eine von vielen Möglichkeiten dar. Insbesondere können die Schweißvorrichtungen 1 hinsichtlich der Zuführung des Schweißdrahts 9, der Länge des Schlauchpakets 20, der Art, Position und Anzahl von Fördervorrichtungen 8 für den Schweißdraht 9, dem Vorhandensein eines Drahtpuffers (nicht dargestellt) und vielem mehr variieren.

Fig. 2 zeigt einen Rohrbogen 19 mit einem Steckerteil 21 und zugehörigen Buchsenteil 34 in getrenntem Zustand in teilweise geschnittener Darstellung. Der Steckerteil 21 ist mit dem Rohrbogen 19 des Schweißbrenners 7 verbunden, vorzugsweise verlötet. Der Steckerteil 21 umfasst ein zylindrisches Rohrelement 22 mit einem darin axial verlaufenden Kanal 23 für einen Schweißdraht 9 und ein Schutzgas 5 (nicht dargestellt). Im zylindrischen Rohrelement 22 verlaufen auch zumindest zwei Kühlkanäle 29, 30 zur Hin- und Rückführung der Kühlflüssigkeit zum Rohrbogen 19. Die Kühlflüssigkeit wird vom Kühlgerät 15 über zumindest einen Kühlkanal 29 im Steckerteil 21 zu den zu kühlenden Stellen des Schweißbrenners im Bereich der Kontaktdüse geleitet. Dort kehrt die Kühlflüssigkeit um und wird über zumindest einen Kühlkanal 30 mit der aufgenommenen Wärme zurücktransportiert. Über entsprechende Kühlkanäle im Schlauchpaket 20 wird die Kühlflüssigkeit dann wieder in das Kühlgerät 15 (siehe Fig. 1) befördert. Die Kühlkanäle 29, 30 enden in entsprechenden Mündungen 46, 46', die bei Verbindung des Steckerteils 21 mit dem zugehörigen Buchsenteil 34 mit Mündungen 41, 41' der Kühlkanäle 40, 40' im Buchsenteil 34 zusammenfallen, sodass ein ungehinderter Fluss der Kühlflüssigkeit zwischen Kühlgerät 15 und Kontaktdüse des Schweißbrenners 7 sichergestellt wird.

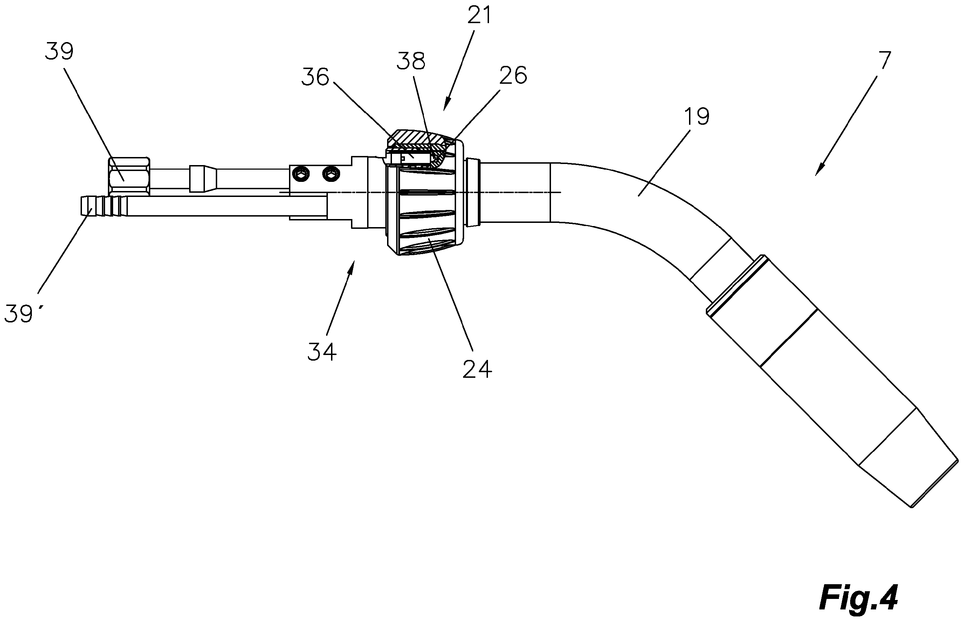

Am Rohrelement 22 des Steckerteils 21 ist eine Überwurfmutter 24 drehbar angeordnet, welche Überwurfmutter 24 ein Innengewinde aufweist, das auf ein entsprechendes Außengewinde an einem zylindrischen Endstück 35 des zugehörigen Buchsenteils 34 aufschraubbar ist. Um das Ende 27 des Rohrelements 22 vor Deformation zu schützen, ist es von Vorteil wenn die Überwurfmutter 24 das Ende 27 des Rohrelements 22 überragt und ein Anschlagelement 28 vorgesehen ist, welches ein axiales Verschieben der Überwurfmutter 24 hinter das Ende 27 des Rohrelements 22 verhindert. Der Steckerteil 21 weist einen Flansch 25 auf, an dem zumindest eine Aufnahmeöffnung 26 vorgesehen sein kann, in welche Aufnahmeöffnung 26 ein entsprechend gestaltetes stiftförmiges Element 36 des Buchsenteils 34 aufgenommen kann (siehe Fig. 4). Bei Übereinstimmung der Position des stiftförmigen Elements 36 des Buchsenteils 34 und der Aufnahmeöffnung 26 am Steckerteil 21 wird eine bestimmte Winkelposition des Rohrbogens 19 festgelegt. Bei der Anordnung mehrere Aufnahmeöffnungen 26 können mehrere Winkelpositionen des Rohrbogens 19 festgelegt werden. Die Aufnahmeöffnung 26 ist im einfachsten Fall durch eine Bohrung gebildet.

Zwischen Überwurfmutter 24 und Flansch 25 des Rohrelements 22 kann ein Gleitring 31 aus elektrisch leitfähigem Material angeordnet sein. Dieser Gleitring 31 erleichtert das Verdrehen des Rohrbogens 19 bei gelockerter Überwurfmutter 24.

Die Überwurfmutter 24 kann in Richtung des freien Endes des Rohrbogens 19 im Bereich der Kontaktdüse kleiner werdenden Durchmesser aufweisen und im Wesentlichen kegelstumpfförmig ausgebildet sein. Dies erleichtert die Handhabung und verhindert das Vorhandensein einer zu großen Abstufung zwischen Überwurfmutter 24 und Rohrbogen 19. Vorzugsweise weist die Überwurfmutter 24 eine Kunststoffumhüllung 33 auf, durch welche eine thermische und elektrische Isolierung hergestellt wird.

Der zum Steckerteil 21 gehörende Buchsenteil 34 wird über nicht dargestellte Einrichtungen mit dem Schlauchpaket 20 oder dem Brennergehäuse 7', welches am Schlauchpaket 20 angeordnet ist, verbunden (nicht dargestellt). Der Buchsenteil 34 weist ein zumindest teilweise zylindrisch ausgebildetes Endstück 35 und einen axial verlaufenden Kanal 37 für den Schweißdraht 9 und das Schutzgas 5 (nicht dargestellt) auf. Über einen Anschluss 45 wird eine im Schlauchpaket 20 verlaufende Leitung zur Zuführung des Schutzgases 5 angeschlossen. Am Endstück 35 ist ein Außengewinde zur Verbindung mit dem entsprechenden Innengewinde der Überwurfmutter 24 des Steckerteils 21 angeordnet, sodass die Verbindung zwischen Steckerteil 21 und Buchsenteil 34 entsprechend fixiert werden kann. An der Stirnseite des Endstücks 35 des Buchsenteils 34 kann sich ein federnd gelagertes stiftförmiges Element 36 befinden, das zur Festlegung zumindest einer Winkelposition des Rohrbogens 19 in zumindest eine Aufnahmeöffnung 26 im Steckerteil 21 ragen kann (siehe Fig. 4). Das stiftförmige Element 36 weist vorzugsweise ein im Wesentlichen halbkugelförmiges Ende 38 auf, sodass es bei Verdrehung des Rohrbogens 19 leicht aus der Aufnahmeöffnung 26 am Flansch 25 des Steckerteils 21 ausgelenkt werden kann.

Im Buchsenteil 34 verlaufen zumindest zwei Kühlkanäle 40, 40' zur Hin- und Rückführung der Kühlflüssigkeit. Die Kühlkanäle 40, 40' im Buchsenteil werden über entsprechende Anschlüsse 39, 39' mit den im Schlauchpaket 20 verlaufenden Leitungen für die Kühlflüssigkeit, welche zum Kühlgerät 15 führen, verbunden. Zur Verbindung der Kühlkanäle 40, 40' mit den entsprechenden Kühlkanälen 29, 30 im Steckerteil 21 bei verbundenem Steckerteil 21 und Buchsenteil 34 befinden sich am Ende des Endstücks 35 des Buchsenteils 34 die entsprechenden Mündungen 41, 41' der Kühlkanäle 40, 40'. Die Mündungen 41, 41' fallen bei verbundenem Steckerteil 21 und Buchsenteil 34 mit den Mündungen 46, 46' der Kühlkanäle 29, 30 im Steckerteil 21 zusammen, sodass die Kühlflüssigkeit ungehindert zum Ende des Schweißbrenners 7 fließen kann. Zur Herstellung eines sogenannten Wasserstopp-Systems existiert zwischen den Kühlkanälen 40, 40' im Buchsenteil 34 ein Verbindungskanal 42, der vorzugsweise von einem Verschlusselement 43 verschlossen wird, wenn der Steckerteil 21 am Buchsenteil 34 angedockt ist. Da der Verbindungskanal 42 ringförmig um den Kanal 37 im Endstück 35 des Buchsenteils 34 verläuft, ist er im dargestellten Schnittbild nicht sichtbar und daher nur angedeutet. Das Verschlusselement 43 kann durch eine Druckfeder 44 vom Verbindungskanal 42 weggeschoben werden, wenn der Steckerteil 21 vom Buchsenteil 34 abgenommen wird. Dadurch wird der Verbindungskanal 42 zwischen den Kühlkanälen 40, 40' freigegeben und die Kühlflüssigkeit über die Anschlüsse 39, 39' zum Kühlgerät 15 zurückgeführt. Dadurch wird wirkungsvoll verhindert, dass Kühlflüssigkeit aus dem Buchsenteil 34 austritt, wenn der Rohrbogen 19 gedreht oder abgekoppelt wird. Bei der Verbindung des Steckerteils 21 mit dem Buchsenteil 34 drückt das Ende 27 des zylindrischen Rohrelements 22 des Steckerteils 21 auf das Verschlusselement 43 und schiebt dieses entgegen der Kraft der Druckfeder 43 zurück, worauf der Verbindungskanal 42 verschlossen wird und die Kühlflüssigkeit über die Mündungen 41, 41' zu den Mündungen 46, 46' der Kühlkanäle 29, 30 im Steckerteil 21 und wieder zurück fließen kann. Wichtig dabei ist, dass die Komponenten des Steckerteils 21 und Buchsenteils 34 so dimensioniert werden, dass der Verbindungskanal 42 freigegeben wird, sobald der Steckerteil 21 vom Buchsenteil 34 gelöst wurde, sodass keine Kühlflüssigkeit vom Buchsenteil 34 austreten kann. Andererseits soll bereits bei loser Verbindung des Steckerteils 21 mit dem Buchsenteil 34, das heißt bei geöffneter oder teilweise geöffneter Überwurfmutter 24, der Fluss der Kühlflüssigkeit vom Kühlgerät 15 zur Kontaktdüse des Schweißbrenners 7 gewährleistet sein. Auch wenn die Überwurfmutter 34 gelockert wird, beispielsweise um den Rohrbogen 19 zu verdrehen, wird eine Kühlung des Schweißbrenners 7 sichergestellt und ein Austritt von Kühlflüssigkeit verhindert. Es ist also möglich, den Rohrbogen 19 ohne Unterbrechung des Kühlkreislaufes zu verdrehen. Dies stellt eine wesentliche Vereinfachung für die Handhabung des Schweißers dar, welcher bisher vor einem Wechsel der Position des Rohrbogens 19 die Kühlung abschalten und nach Fixierung des Rohrbogens in der neuen Position die Kühlung wieder einschalten musste.

Um dem Schweißer optimale Flexibilität bieten zu können, ist der Rohrbogen 19 des Schweißbrenners 7 vorzugsweise um 360° verdrehbar. Zum Zwecke des Verdrehens wird die Überwurfmutter 24 leicht gelöst, sodass das allfällige stiftförmige Element 36 aus der Aufnahmeöffnung 26 ausgelenkt werden kann und in die gewünschte Position verdreht werden kann. Danach wird die Überwurfmutter 24 wieder angezogen, sodass eine optimale Verbindung zwischen Steckerteil 21 und Buchsenteil 34 geschaffen wird.

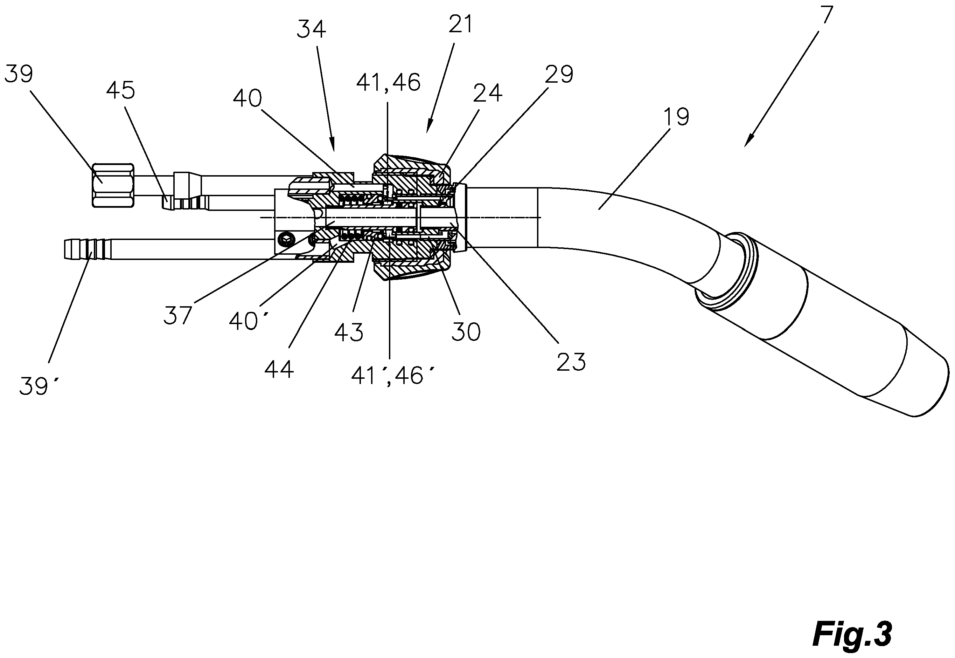

In Fig. 3 ist der Rohrbogen 19 mit Steckerteil 21 und Buchsenteil 34 gemäß Fig. 2 in verbundenem Zustand teilweise geschnitten dargestellt. In der dargestellten Position wird das Verschlusselement 43 gegen die Druckfeder 44 über den Verbindungskanal 42 geschoben, sodass die Kühlflüssigkeit ungehindert über die Kühlkanäle 40, 40' im Buchsenteil 34 und die Kühlkanäle 29, 30 im Steckerteil 21 fließen kann und somit den Schweißbrenner 7 entsprechend kühlen kann.

Fig. 4 zeigt den Rohrbogen 19 mit Steckerteil 21 und Buchsenteil 34 gemäß Fig. 2 in verbundenem Zustand in teilweise geschnittener Darstellung in einer gegenüber Fig. 3 etwas gedrehten Stellung, in der das bereits beschriebene stiftförmige Element 36 am Buchsenteil 34 sichtbar ist. In der dargestellten Position befindet sich der Rohrbogen 19 in der festgelegten Winkelposition in der das stiftförmige Element 36 in die Aufnahmeöffnung 26 am Flansch 25 des Steckerteils 25 ragt. Wie bereits erwähnt, weist das stiftförmige Element 36 vorzugsweise ein im Wesentlichen halbkugelförmiges Ende 38 auf, sodass es bei Verdrehung des Rohrbogens 19 leicht aus der zumindest einen Aufnahmeöffnung 26 am Flansch 25 des Steckerteils 21 ausgelenkt werden kann. Die Überwurfmutter 24 bzw. deren Kunststoffumhüllung 33 kann mit axial verlaufenden Riefen oder dgl. versehen sein, um die Handhabung der Überwurfmutter 24 zu erleichtern.

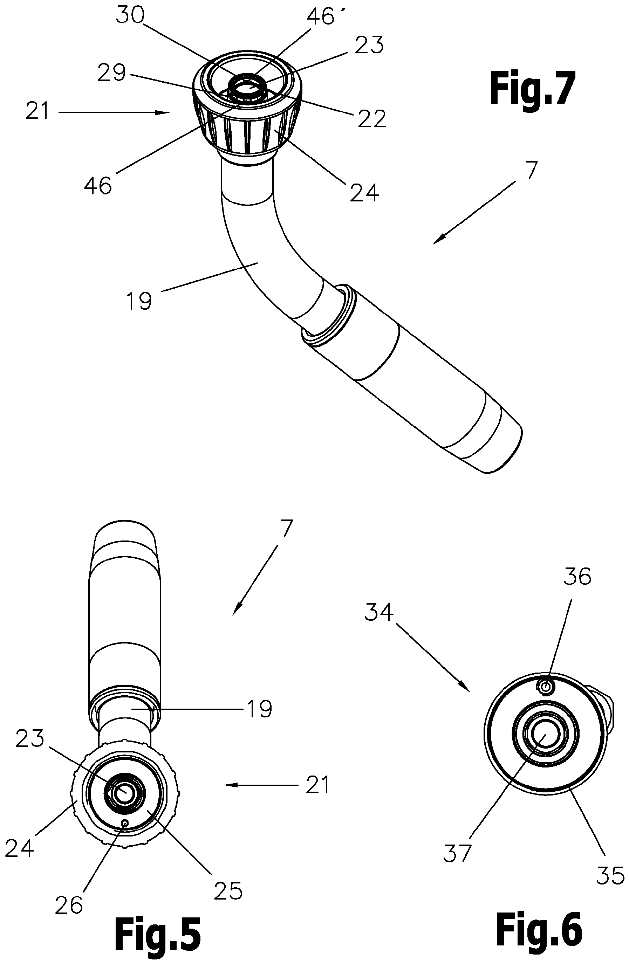

Aus der Stirnansicht auf den mit dem Rohrbogen 19 verbundenen Steckerteil 21 gemäß Fig. 5 ist die Aufnahmeöffnung 26 am Steckerteil 21 erkennbar. Wie bereits erwähnt können auch mehrere Aufnahmeöffnungen 26 am Steckerteil 21 angeordnet sein um mehrere Bezugslagen für den Rohrbogen 19 herzustellen.

Fig. 6 zeigt eine Stirnansicht auf den Buchsenteil 34, aus welcher das Endstück 35 ersichtlich ist. Auch das stiftförmige Element 36, welches im zylindrischen Endstück 35 federnd gelagert ist, und der Kanal 37 für den Schweißdraht 9 und das Schutzgas 5 ist dargestellt.

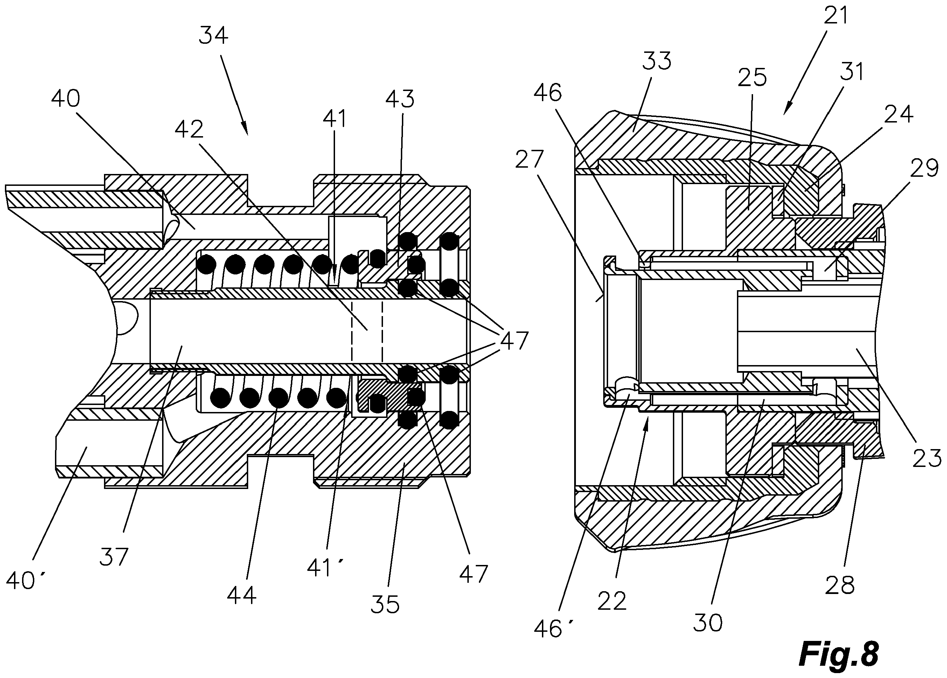

Fig. 7 zeigt eine Schrägansicht auf den mit dem Rohrbogen 19 verbundenen Steckerteil 21. Neben dem Kanal 23 für den Schweißdraht 9 und das Schutzgas 5 ist die Überwurfmutter 24 und das zylindrische Rohrelement 22 des Steckerteils 21 deutlich ersichtlich. Im zylindrischen Rohrelement 22 verlaufen zumindest zwei Kühlkanäle 29, 30 zur Hin- und Rückführung der Kühlflüssigkeit zum Rohrbogen 19. Die Mündungen 46, 46' dieser Kühlkanäle 29, 30 sind so angeordnet, dass es zu einer sogenannten Zwangsführung der Kühlflüssigkeit zu den zu kühlenden Teilen des Schweißbrenners kommt und eine Umkehr der Kühlflüssigkeit im Bereich des Steckerteils 21 verhindert werden kann. Dies wird dadurch erreicht, dass die Mündung 46 des zumindest einen Kühlkanals 29 für die Hinleitung der Kühlflüssigkeit und die Mündung 46' des zumindest einen Kühlkanals 30 für die Rückleitung der Kühlflüssigkeit versetzt angeordnet sind. Beispielsweise können die Kühlkanäle 29, 30 koaxial zueinander im zylindrischen Rohrelement 22 verlaufend angeordnet sein und die Mündung 46 für den einen Kühlkanal 29 radial nach außen weisen und die Mündung 46' für den anderen Kühlkanal 30 in axialer Richtung angeordnet sein (siehe auch Fig. 8).

Schließlich zeigt Fig. 8 den Steckerteil 21 und Buchsenteil 34 in getrenntem Zustand gemäß Fig. 2 in vergrößerter Darstellung. Hierzu wird auf die Beschreibung der Fig. 2 verwiesen. Wie aus der vergrößerten Darstellung gemäß Fig. 8 ersichtlich ist, kann an der Stirnseite des Verschlusselements 43, welches in Richtung Steckerteil 21 weist, zumindest ein Dichtungsring 47 angeordnet sein. Ebenfalls können im Ringspalt, in welchen das zylindrische Rohrelement 22 des Steckerteils 21 beim Verbinden mit dem Buchsenteil 34 eingeschoben wird, weitere Dichtungsringe 47 angeordnet sein. Dadurch wird wirkungsvoll verhindert, dass Kühlflüssigkeit nach außen tritt, wenn der Steckerteil 21 vom Buchsenteil 34 getrennt wird. Es ist deutlich ersichtlich, dass die beiden Kühlkanäle 40 und 40' im Buchsenteil 34 speziell angeordnet sind. Der eine Kühlkanal 40 liegt außerhalb des von der Druckfeder 44 eingenommenen ringförmigen Raumes im Endstück, während der andere Kühlkanal 40' im Ringraum, in welchem die Druckfeder 44 angeordnet ist, mündet. Durch diese spezielle Anordnung wird die Verbindung mit den Kühlkanälen 29, 30 im Steckerteil 21 bei verbundenem Steckerteil 21 und Buchsenteil 34 ohne Austritt der Kühlflüssigkeit und ohne Gefahr eines ungewollten Umkehrens der Kühlflüssigkeit bevor diese die zu kühlenden Komponenten im Svchweißbrenner 7 erreicht.

Am Steckerteil 21 befinden sich zumindest zwei Kühlkanäle 29, 30 zur Hin- und Rückführung einer Kühlflüssigkeit. Die Mündung 46 des einen Kühlkanals 29 für die Hinführung der Kühlflüssigkeit und die Mündung 46' des zumindest einen Kühlkanals 30 für die Rückführung der Kühlflüssigkeit sind getrennt angeordnet. Im Detail ist die Mündung 46 des einen Kühlkanals 29 außen am zylindrischen Rohrelement 22 angeordnet bzw. weist nach außen, während die Mündung 46' des anderen Kühlkanals 30 innen am zylindrischen Rohrelement 22 angeordnet ist, bzw. nach innen weist. Bei Verbindung des Steckerteils 21 mit dem Buchsenteil 34 wird das Verschlusselement 43 durch das zylindrische Rohrelement 22 des Steckerteils 21 im Ringkanal des Endstücks 35 zurückgeschoben und die Mündung 41 des Kühlkanals 40 im Buchsenteil 34 liegt über dem Ringraum am Ende des zylindrischen Rohrelements 22, in dem die außen liegende Mündung 46 des Kühlkanals 29 am zylindrischen Rohrelement 22 des Steckerteils 21 angeordnet ist. Die Mündung 41' des anderen Kühlkanals 40' im Buchsenteil 34 weist hingegen in axialer Richtung im Ringraum des Endstücks 35 nach außen zur innen am zylindrischen Rohrelement 22 des Steckerteils 21 angeordneten Mündung 46' des anderen Kühlkanals 30. Durch diese getrennte Anordnung der Mündungen 46, 46' der Kühlkanäle 29, 30 im Steckerteil 21 kann verhindert werden, dass die Kühlflüssigkeit bereits im Bereich der Verbindungseinrichtung umkehrt, ohne die Komponenten im Schweißbrenner 7 gekühlt zu haben. Durch die dargestellte versetzte bzw. getrennte Anordnung der Mündungen 46, 46' wird die oben erwähnte Zwangsführung der Kühlflüssigkeit erzielt.

Wird die Überwurfmutter 24 leicht gelockert, wird das im Ringraum des Endstücks 35 befindliche Verschlusselement 43 in Form eines rohrförmigen Teils durch die Druckfeder 44 in Richtung Steckerteil 21 geschoben, wodurch der Verbindungskanal 42 freigegeben wird und die Kühlflüssigkeit zum Kühlgerät 15 zurückgeführt wird. Gleichzeitig wird durch die entsprechende Konstruktion des Verschlusselements 43 und des Ringraums im Endstück 35 ein Fluss der Kühlflüssigkeit in Richtung Steckerteil verhindert, da das Verschlusselement 43 zusammen mit den Dichtungsringen 47 ein Austreten der Kühlflüssigkeit verhindert. Nachdem die gewünschte Position des Rohrbogens 19 eingenommen und die Überwurfmutter 24 wieder angezogen wurde, ist das Verschlusselement 43 wieder in einer Position, in der der Verbindungskanal 42 gesperrt und der Ringraum im Endstück 35 in Richtung Steckerteil freigegeben ist. Somit ist eine rasche Änderung der Position des Rohrbogens 19 oder ein Wechsel des Rohrbogens 19 auch ohne Deaktivierung des Kühlsystems der Schweißvorrichtung möglich.

Um zu verhindern, dass ungeeignete Rohrbögen 19 mit dem Buchsenteil 34 der Verbindungseinrichtung verbunden werden können, ist es von Vorteil, wenn die Dimensionen der Verbindungseinrichtung, beispielsweise bei gasgekühlten Schweißbrennern 7 und wassergekühlten Schweißbrennern, unterschiedlich gewählt werden. Somit kann verhindert werden, dass ein Rohrbogen 19 für einen gasgekühlten Schweißbrenner 7 mit einem Schlauchpaket für einen wassergekühlten Schweißbrenner verbunden wird und umgekehrt.

## Patentansprüche

1. Steckerteil (21) zur lösbaren Verbindung eines Rohrbogens (19) eines wassergekühlten Schweißbrenners (7) mit einem an einem Schlauchpaket (20) allenfalls unter Zwischenanordnung eines Brennergehäuses (7') angeordneten Buchsenteil (34), mit einem zylindrischen Rohrelement (22) mit einem axial verlaufenden Kanal (23) für einen Schweißdraht (9) und ein Schutzgas (5) und mit zumindest zwei Kühlkanälen (29, 30) zur Hin- und Rückführung einer Kühlflüssigkeit, und mit einer drehbar am Rohrelement (22) angeordneten Überwurfmutter (24) mit einem Innengewinde zur Verbindung mit einem entsprechenden Außengewinde am Buchsenteil (34), wobei die Mündung (46) des zumindest einen Kühlkanals (29) für die Hinführung der Kühlflüssigkeit und die Mündung (46') des zumindest einen Kühlkanals (30) für die Rückführung der Kühlflüssigkeit getrennt angeordnet sind, **dadurch gekennzeichnet, dass** die Mündung (46) des einen Kühlkanals (29) außen am zylindrischen Rohrelement (22) und die Mündung (46') des anderen Kühlkanals (30) innen am zylindrischen Rohrelement (22) angeordnet ist.

2. Steckerteil (21) nach Anspruch 1, **dadurch gekennzeichnet, dass** am Rohrelement (22) ein Flansch (25) mit zumindest einer Aufnahmeöffnung (26) zur Aufnahme eines stiftförmigen Elements (36) des Buchsenteils (34) zur Festlegung zumindest einer Winkelposition des Rohrbogens (19) angeordnet ist.

3. Steckerteil (21) nach Anspruch 2, **dadurch gekennzeichnet, dass** die Aufnahmeöffnung (26) durch eine Bohrung gebildet ist.

4. Steckerteil (21) nach einem der Ansprüche 1 bis 3, **dadurch gekennzeichnet, dass** die Überwurfmutter (24) das Ende (27) des Rohrelements (22) überragt, und ein Anschlagelement (28) zur Verhinderung eines axialen Verschiebens der Überwurfmutter (24) hinter das Ende (27) des Rohrelements (22) vorgesehen ist.

5. Steckerteil (21) nach einem der Ansprüche 1 bis 4, **dadurch gekennzeichnet, dass** zwischen der Überwurfmutter (24) und dem Flansch (25) des Rohrelements (22) ein Gleitring (31) aus elektrisch leitfähigem Material angeordnet ist.

6. Steckerteil (21) nach einem der Ansprüche 1 bis 5, **dadurch gekennzeichnet, dass** die Überwurfmutter (24) in Richtung des freien Endes des Rohrbogens (19) kleiner werdenden Durchmesser aufweist, und vorzugsweise kegelstumpfförmig ausgebildet ist.

7. Steckerteil (21) nach einem der Ansprüche 1 bis 6, **dadurch gekennzeichnet, dass** die Überwurfmutter (24) eine Kunststoffumhüllung (33) aufweist.

8. Buchsenteil (34) zur lösbaren Verbindung eines Schlauchpakets (20) mit einem an einem Rohrbogen (19) eines wassergekühlten Schweißbrenners (7) angeordneten Steckerteil (21), mit einem zumindest teilweise zylindrisch ausgebildeten Endstück (35) mit einem axial verlaufenden Kanal (37) für einen Schweißdraht (9) und ein Schutzgas (5) und zumindest zwei Kühlkanälen (40, 40') zur Hin- und Rückführung einer Kühlflüssigkeit mit entsprechenden Mündungen (41, 41') am Endstück (35), und mit einem Außengewinde zur Verbindung mit einem entsprechenden Innengewinde einer Überwurfmutter (24) des Steckerteils (21), **dadurch gekennzeichnet, dass** im Endstück (35) ein Verbindungskanal (42) zwischen den zumindest zwei Kühlkanälen (40, 40') vorgesehen ist, welcher bei verbundenem Steckerteil (21) geschlossen und bei getrenntem Steckerteil (21) geöffnet ist.

9. Buchsenteil (34) nach Anspruch 8, **dadurch gekennzeichnet, dass** ein in Richtung des zu verbindenden Steckerteils (21) federnd gelagertes stiftförmiges Element (36) vorgesehen ist, welches zur Festlegung zumindest einer Winkelposition des Rohrbogens (19) von zumindest einer Aufnahmeöffnung (26) im Steckerteil (21) aufnehmbar ist.

10. Buchsenteil (34) nach Anspruch 9, **dadurch gekennzeichnet, dass** das stiftförmige Element (36) ein im Wesentlichen halbkugelförmiges Ende (38) aufweist.

11. Buchsenteil (34) nach einem der Ansprüche 8 bis 10, **dadurch gekennzeichnet, dass** ein durch eine um den Kanal (37) angeordnete Druckfeder (44) federnd gelagertes Verschlusselement (43) zum Verschließen der Mündungen (41, 41') der zumindest zwei Kühlkanäle (40, 40') am Endstück (35) bei getrenntem Steckerteil (21) vorgesehen ist.

12. Verbindungseinrichtung zur lösbaren Verbindung eines Rohrbogens (19) eines wassergekühlten Schweißbrenners (7) mit einem Schlauchpaket (20), wobei der Rohrbogen (19) einen Steckerteil (21) nach einem der Ansprüche 1 bis 7 und das Schlauchpaket (20) allenfalls unter Zwischenanordnung eines Brennergehäuses (7') einen Buchsenteil (34) nach einem der Ansprüche 8 bis 11 aufweist.

13. Verbindungseinrichtung nach Anspruch 12, **dadurch gekennzeichnet, dass** der Steckerteil (21) mit dem Rohrbogen (19) verbunden, vorzugsweise verlötet, ist.

14. Verbindungseinrichtung nach Anspruch 12 oder 13, **dadurch gekennzeichnet, dass** der Buchsenteil (34) mit dem Ende eines Schlauchpakets (20) allenfalls unter Zwischenanordnung eines Brennergehäuses (7') verbunden ist.

15. Verbindungseinrichtung nach einem der Ansprüche 12 bis 14, **dadurch gekennzeichnet, dass** der Rohrbogen (19) gegenüber dem Schlauchpaket (20) um 360° verdrehbar ist, wobei zumindest eine Winkelposition des Rohrbogens (19) durch die zumindest eine Aufnahmeöffnung (26) im Steckerteil (21) und das stiftförmige Element (36) im Buchsenteil (34) festgelegt ist.

## Claims

1. Plug part (21) for detachably connecting a pipe bend (19) of a water-cooled welding blowpipe (7) to a socket part (34) that is arranged on a hose assembly (20), if necessary by interposing a welding blowpipe housing (7'), the plug part comprising a cylindrical pipe element (22) comprising an axially extending channel (23) for a welding wire (9) and a shielding gas (5) and comprising at least two cooling channels (29, 30) for supplying and returning a cooling liquid, and comprising a union nut (24) that is rotatably arranged on the pipe element (22) and comprises an inner thread for connection to a corresponding outer thread on the socket part (34), the opening (46) of the at least one cooling channel (29) for supplying the cooling liquid and the opening (46') of the at least one cooling channel (30) for returning the cooling liquid being separate, **characterised in that** the opening (46) of one cooling channel (29) is arranged on the outside of the cylindrical pipe element (22) and the opening (46') of the other cooling channel (30) is arranged on the inside of the cylindrical pipe element (22).

2. Plug part (21) according to claim 1, **characterised in that** a flange (25) comprising at least one receiving opening (26) for receiving a pin-shaped element (36) of the socket part (34) is arranged on the pipe element (22) in order to define at least one angular position of the pipe bend (19).

3. Plug part (21) according to claim 2, **characterised in that** the receiving opening (26) is formed by a hole.

4. Plug part (21) according to any of claims 1 to 3, **characterised in that** the union nut (24) projects beyond the end (27) of the pipe element (22), and a stop element (28) is provided for preventing axial displacement of the union nut (24) behind the end (27) of the pipe element (22).

5. Plug part (21) according to any of claims 1 to 4, **characterised in that** a sliding ring (31) made of an electrically conductive material is arranged between the union nut (24) and the flange (25) of the pipe element (22).

6. Plug part (21) according to any of claims 1 to 5, **characterised in that** the union nut (24) has a diameter that decreases towards the free end of the pipe bend (19), and is preferably frustoconical.

7. Plug part (21) according to any of claims 1 to 6, **characterised in that** the union nut (24) comprises a plastics material sheath (33).

8. Socket part (34) for detachably connecting a hose assembly (20) to a plug part (21) arranged on a pipe bend (19) of a water-cooled welding blowpipe (7), the socket part comprising an at least partially cylindrical end piece (35) having an axially extending channel (37) for a welding wire (9) and a shielding gas (5) and at least two cooling channels (40, 40') for supplying and returning a cooling liquid by means of corresponding openings (41, 41') on the end piece (35), and comprising an outer thread for connecting to a corresponding inner thread of a union nut (24) of the plug part (21), **characterised in that** a connecting channel (42) is provided in the end piece (35) between the at least two cooling channels (40, 40'), which connecting channel is closed when the plug part (21) is connected and open when the plug part (21) is separated.

9. Socket part (34) according to claim 8, **characterised in that** a pin-shaped element (36) that is spring-mounted towards the plug part (21) to be connected is provided, which element can be received by at least one receiving opening (26) in the plug part (21) in order to define at least one angular position of the pipe bend (19).

10. Socket part (34) according to claim 9, **characterised in that** the pin-shaped element (36) comprises a substantially hemispheric end (38).

11. Socket part (34) according to any of claims 8 to 10, **characterised in that** a closing element (43) that is spring-mounted by a compression spring (44) arranged around the channel (37) is provided for closing the openings (41, 41') of the at least two cooling channels (40, 40') on the end piece (35) when the plug part (21) is separated.

12. Connecting device for detachably connecting a pipe bend (19) of a water-cooled welding blowpipe (7) to a hose assembly (20), wherein the pipe bend (19) comprises a plug part (21) according to any of claims 1 to 7 and the hose assembly (20) comprises a socket part (34) according to any of claims 8 to 11, if necessary by interposing a welding blowpipe housing (7').

13. Connecting device according to claim 12, **characterised in that** the plug part (21) is connected, preferably soldered, to the pipe bend (19).

14. Connecting device according to either claim 12 or claim 13, **characterised in that** the socket part (34) is connected to the end of a hose assembly (20), if necessary by interposing a welding blowpipe housing (7').

15. Connecting device according to any of claims 12 to 14, **characterised in that** the pipe bend (19) is rotatable by 360° relative to the hose assembly (20), at least one angular position of the pipe bend (19) being defined by the at least one receiving opening (26) in the plug part (21) and the pin-shaped element (36) in the socket part (34).

## Revendications

1. Partie de connecteur (21) pour la liaison amovible d'un tube coudé (19) d'un chalumeau de soudage refroidi par eau (7) avec une partie de douille (34) disposée sur un ensemble de tuyaux (20), le cas échéant, en intercalant un boîtier de chalumeau (7'), avec un élément tubulaire cylindrique (22) avec un canal à extension axiale (23) pour un fil de soudure (9) et un gaz de protection (5) et avec au moins deux canaux de refroidissement (29, 30) pour l'aller et le retour d'un liquide de refroidissement, et avec un écrou de raccordement (24) disposé de manière rotative sur l'élément tubulaire (22) avec un filetage interne pour la liaison avec un filetage externe correspondant sur la partie de douille (34), l'embouchure (46) de l'au moins un canal de refroidissement (29) pour le guidage aller du liquide de refroidissement et l'embouchure (46') de l'au moins un canal de refroidissement (30) pour le guidage retour du liquide de refroidissement étant disposées séparément, **caractérisée en ce que** l'embouchure (46) d'un canal de refroidissement (29) et l'embouchure (46') de l'autre canal de refroidissement (30) sont disposées à l'intérieur sur l'élément tubulaire cylindrique (22).

2. Partie de connecteur (21) selon la revendication 1, **caractérisée en ce que**, sur l'élément tubulaire (22), est disposée une bride (25) avec au moins une ouverture de logement (26) pour le logement d'un élément en forme de tige (36) de la partie de douille (34) pour la fixation d'au moins une position angulaire du tube coudé (19).

3. Partie de connecteur (21) selon la revendication 2, **caractérisée en ce que** l'ouverture de logement (26) est constituée d'un alésage.

4. Partie de connecteur (21) selon l'une des revendications 1 à 3, **caractérisée en ce que** l'écrou de raccordement (24) dépasse de l'extrémité (27) de l'élément tubulaire (22) et un élément de butée (28) est prévu pour empêcher un déplacement axial de l'écrou de raccordement (24) derrière l'extrémité (27) de l'élément tubulaire (22).

5. Partie de connecteur (21) selon l'une des revendications 1 à 4, **caractérisée en ce que**, entre l'écrou de raccordement (24) et la bride (25) de l'élément tubulaire (22) est disposée une bague de glissement (31) en matériau électro-conducteur.

6. Partie de connecteur (21) selon l'une des revendications 1 à 5, **caractérisée en ce que** l'écrou de raccordement (24) présente, en direction de l'extrémité libre du tube coudé (19), un diamètre qui se rétrécit et est conçu de préférence avec une forme tronconique.

7. Partie de connecteur (21) selon l'une des revendications 1 à 6, **caractérisée en ce que** l'écrou de raccordement (24) comprend une enveloppe en matière plastique (33).

8. Partie de douille (34) pour la liaison amovible d'un ensemble de tuyaux (20) avec une partie de connecteur (21) disposée sur un tube coudé (19) d'un chalumeau de soudure refroidi par eau (7), avec un embout (35) conçu de manière au moins partiellement cylindrique, avec un canal (37) à extension axiale pour un fil de soudure (9) et un gaz de protection (5) et au moins deux canaux de refroidissement (40, 40') pour le guidage aller et retour d'un liquide de refroidissement avec des embouchures (41, 41') correspondantes sur l'embout (35), et avec un filetage externe pour la liaison avec un filetage interne correspondant d'un écrou de raccordement (24) de la partie de connecteur (21), **caractérisée en ce que**, dans l'embout (35), un canal de liaison (42) est prévu entre les au moins deux canaux de refroidissement (40, 40'), qui est fermé lorsque la partie de connecteur (21) est reliée et qui est ouvert lorsque la partie de connecteur (21) est séparée.

9. Partie de douille (34) selon la revendication 8, **caractérisée en ce qu'**un élément en forme de tige (36), logé de manière élastique en direction de la partie de connecteur (21) à relier, est prévue, qui peut être logée par au moins une ouverture de logement (26) dans la partie de connecteur (21) pour la fixation d'au moins une position angulaire du tube coudé (19).

10. Partie de douille (34) selon la revendication 9, **caractérisée en ce que** l'élément en forme de tige (36) comprend une extrémité (38) de forme globalement semi-sphérique.

11. Partie de douille (34) selon l'une des revendications 8 à 10, **caractérisée en ce qu'**un élément de fermeture (43), logé de manière élastique à l'aide d'un ressort de compression (44) disposé autour du canal (37) est prévu pour la fermeture des embouchures (41, 41') des au moins deux canaux de refroidissement (40, 40') sur l'embout (35) lorsque la partie de connecteur (21) est séparée.

12. Dispositif de liaison pour la liaison amovible d'un tube coudé (19) d'un chalumeau de soudure refroidi par eau (7) avec un ensemble de tuyaux (20) le tube coudé (19) comprenant une partie de connecteur (21) selon l'une des revendications 1 à 7 et l'ensemble de tuyaux (20) comprenant, le cas échéant en intercalant un boîtier de chalumeau (7'), une partie de douille (34) selon l'une des revendications 8 à 11.

13. Dispositif de liaison selon la revendication 12, **caractérisé en ce que** la partie de connecteur (21) est reliée, de préférence brasée, avec le tube coudé (19).

14. Dispositif de liaison selon la revendication 12 ou 13, **caractérisé en ce que** la partie de douille (34) est reliée avec l'extrémité d'un ensemble de tuyaux (20), le cas échéant en intercalant un boîtier de chalumeau (7').

15. Dispositif de liaison selon l'une des revendications 12 à 14,
**caractérisé en ce que** le tube coudé (19) peut tourner de 360° par rapport à l'ensemble de tuyaux (20), au moins une position angulaire du tube coudé (19) à travers l'au moins une ouverture de logement (26) dans la partie de connecteur (21) et l'élément en forme de tige (36) dans la partie de douille (34) étant fixée.
